# EUROPEAN PATENT SPECIFICATION

(11) **EP 0 260 658 B1**
(45) Date of publication and mention of the grant of the patent: **27.04.1994**
(21) Application number: 87113479.7
(22) Date of filing: 15.09.1987
(51) Int. Cl.: H04N 17/02

(54) **Television signal generator**
Fernsehsignalerzeuger
Générateur de signal de télévision

(30) Priority: 17.09.1986 US 908553
(43) Date of publication of application: 23.03.1988
(73) Proprietor: TEKTRONIX, INC., Beaverton Oregon 97077 (US)
(72) Inventor: Holmbo, Dennis L., Beaverton Oregon (US); Penney, Bruce J., Portland Oregon 97229 (US); Reynolds, John C., Vancouver Washington 98684 (US)
(74) Representative: Baillie, Iain Cameron

(56) References cited:
- EP-A- 0 089 873
- Boris TOWNSEND - "PAL Colour Television" Cambridge at the university press - 1970 Published in association with the IEE Library of Congress Catalogue Card Number: 76-96102 Standard Book Number: 521 07696 X pages 127 - 134

## Description

### Background of the Invention

The present invention relates to a television signal generator.

Prior television test signal generators, such as the 141OR series sync and test signal generators manufactured by Tektronix, Inc. of Beaverton, Oregon, were analog. All of the signal components are generated with analog techniques, and use for example an analog PAL coder. A typical PAL coder is shown in IEE Monograph Series 3, PAL Colour Television by B. Townsend, pages 127-134. Digital circuitry is used only to time and switch the analog components. Some of the problems with this architecture include imprecise subcarrier to horizontal (SCH) phase and residual subcarrier in the video output. However such analog techniques did allow for slewing of phase so that ringing of multiburst signals, caused typically by filters in a television system being tested, could be readily detected.

Another approach, as exemplified by the PM5630 test signal generator manufactured by Philips Denmark and the TSG300 component television generator manufactured by Tektronix, Inc., uses a digital component approach. The analog component generators are replaced with programmable read only memories (PROMs) followed by digital to analog converters (DACs) and low pass filters. The chrominance subcarrier is generated by modulating an oscillator running at the subcarrier frequency with the outputs of the chrominance component envelop DACs. The output of the luminance channel is summed with the modulated subcarrier to produce the test signal output. This architecture provides improved test signal flexibility, but the analog modulation scheme still leaves residual subcarrier and SCH error in the video output. Also due to the memory required to store separate patterns for each horizontal line to simulate phase slewing, such phase slewing capability is lost.

EP-A-0 089 873 discloses a test signal generator for electronic equipment, especially for television, in which chrominance and luminance components are stored in a buffer memory before feeding to a digital to analog converter. The analog signals output by this converter are fed to a signal shaping circuit, which is also fed with PAL synchronising signals, so as to produce a PAL output.

What is desired is a television signal generator which eliminates residual subcarrier and SCH error in the video output while maintaining a phase slewing capability without large memory expenditure.

### Summary of the Invention

According to a first aspect of this invention, there is provided a television signal generator as claimed in claim 1. According to a second aspect of this invention, there is provided a television signal generator as claimed in claim 3.

The objects, advantages and other novel features of the present invention will be apparent from the following detailed description when read in conjunction with the appended claims and attached drawing.

### Brief Description of the Drawing

Fig. 1 is a block diagrammatic view of a first embodiment of a television signal generator according to the present invention.

Fig. 2 is a block diagrammatic view of a second embodiment of a television signal generator according to the present invention.

Fig. 3 is a block diagrammatic view of a third embodiment of a television signal generator according to the present invention.

Fig. 4 is a block diagrammatic view of an offset generator for use in a television signal generator according to the present invention.

Fig. 5 is a block diagrammatic view of a fourth embodiment of a television signal generator according to the present invention.

Fig. 6 is a block diagrammatic view of a fifth embodiment of a television signal generator according to the present invention.

Fig. 7 is a block diagrammatic view of a sixth embodiment of a television signal generator according to the present invention.

Fig. 8 is a block diagrammatic view of a portion of a signal address generator for a television signal generator according to the present invention.

Fig. 9 is a block diagrammatic view of a seventh embodiment of a television signal generator according to the present invention.

Fig. 10 is a block diagrammatic view of a eighth embodiment of a television signal generator according to the present invention.

### Description of the Preferred Embodiment

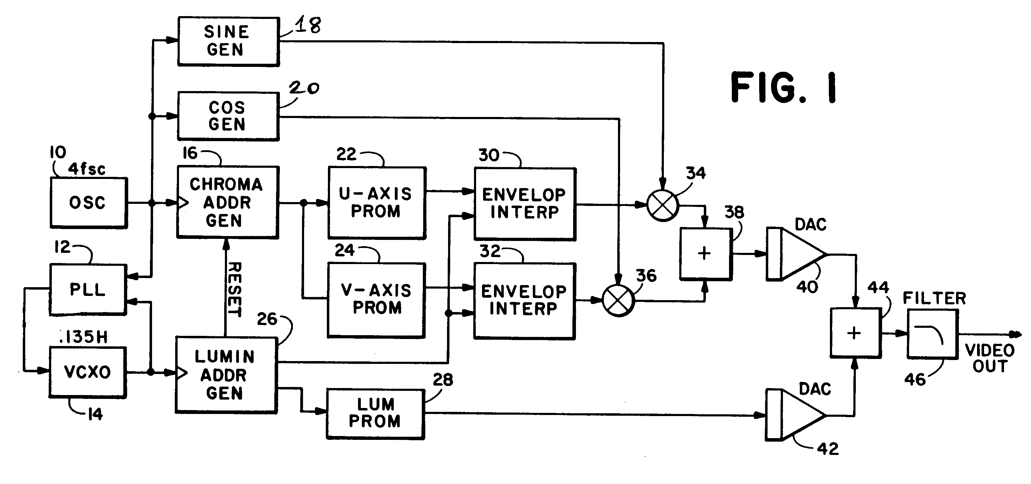

Referring now to Fig. 1 a first embodiment of a television signal generator is shown using PAL color nomenclature and numerical values. A system clock 10 runs at four times the subcarrier frequency, 4f_{sc}, and provides the timing for the generator circuits. The output of the system clock 10 is input to a phase locked loop 12 which controls a voltage controlled crystal oscillator (VCXO) 14 to produce a frequency at 1135 times the horizontal line rate. The output of the system clock 10 is also input respectively to a chrominance address generator 16, a digital sine wave generator 18 and a digital cosine wave generator 20. The sine and cosine generators 18, 20 produce digital representations of sine and cosine functions at the subcarrier frequency. The chrominance address generator 16 fetches data from a U-axis and a V-axis PROM 22, 24, respectively, at four times the subcarrier rate.

The output of the VCXO 14 clocks a luminance address generator 26 to fetch data from a luminance PROM 28 at a rate of 1135 sample points per horizontal line. The luminance address generator 26 also sends a reset signal to the chrominance address generator 16 at the beginning of each field. This prevents clock skew errors from accumulating and thereby minimizes SCH phase error.

Data fetched from the U-axis and V-axis PROMs 22, 24 pass through respective envelope interpolators 30, 32 which allow the subcarrier envelope data to be shifted slightly on a line-by-line basis. This is required for the PAL television system because the PAL subcarrier frequency is not an integer multiple of the horizontal scanning frequency. Thus the subcarrier envelope must be expanded by a total of four sample points every 625 lines. One way to implement the envelope interpolators 30, 32 is to store each envelope sample as two components -- a starting point and a slope. On the first line of a frame the starting point value is passed through the envelope interpolator 30, 32 without any modification. For the next half field the envelope sample is computed by adding an offset to the starting point value. This offset value is a function of the starting point value, the slope and the line number. After half the field has been scanned the line one starting point of the subcarrier envelope is shifted by exactly one sample and the process described above is repeated. After the last line of field one the process repeats again with a resultant shift of exactly two samples. This same process continues through the second field, resulting in an expansion of the subcarrier envelope by exactly four sample points over a period of 625 lines.

After the U-axis and V-axis subcarrier data have been interpolated, they are multiplied by the digital representations of Sin(F_{sc}) and Cos(F_{sc}), respectively, by respective multipliers 34, 36. Since the resultant samples are clocked at 4f_{sc}, envelope points may be chosen to simplify the sinusoidal generators 18, 20, i.e., SINE = 0, +1, 0, -1, . . . and COS = +1, 0, -1, 0, . . ., thereby also simplifying the multipliers 34, 36. The resultant data are then input to an adder 38 and the resulting output is passed through a DAC 40 to produce a modulated subcarrier. Data from the luminance PROM 28 is passed through a second DAC 42, and the two DAC outputs are input to a second adder 44. The resultant combined luminance and chrominance data is then passed through a low pass filter 46 to produce the video output. Since all chrominance data is produced digitally, residual subcarrier is eliminated. Also, the SCH error is less than in a fully analog comparator, but is not as stable as in a generator using a single DAC or an improved clock generator as described below

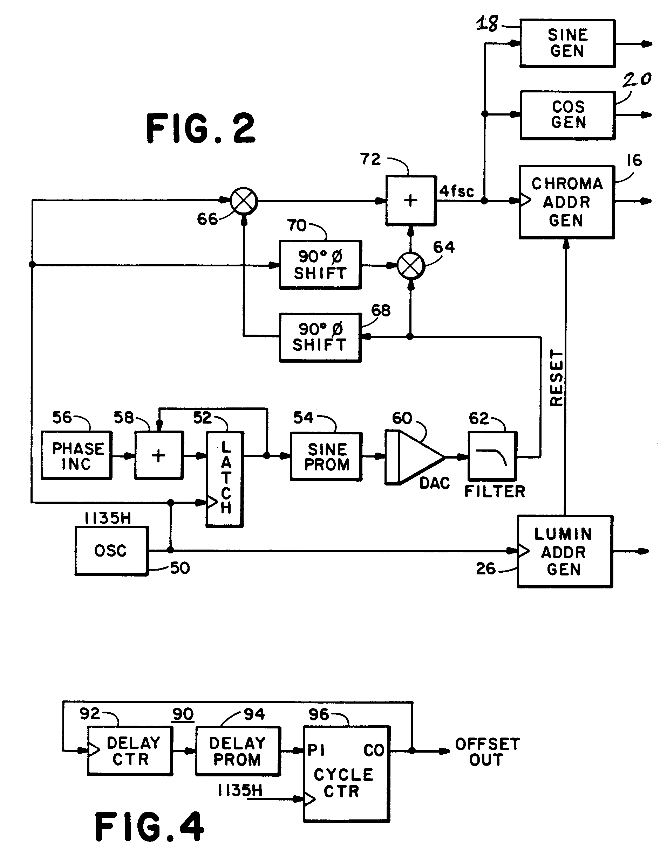

As shown in Fig. 2 an improved technique is used to derive the four times subcarrier frequency from a clock 50 running at 1135 times the horizontal line rate. The clock 50 is used to increment an address pointer latch 52 into a PROM 54 which contains one cycle of a digitized sine wave. The length of the digitized sine wave is chosen to be a power of two so that, by using binary addition and ignoring carries, the address offsets "wrap around" from the end of the sine wave back to the beginning. A phase increment circuit 56 outputs a value which is summed in adder 58 with the output of the latch 52 and then input back into the latch to provide a new address pointer. The value of the phase increment is chosen such that the output of the sine PROM 54 is a digital representation of a 100 Hz since wave. The data from the sine PROM 54 is sent to a DAC 60 and low pass filter 62, and is then mixed with the 1135H clock in a pair of balanced analog modulators 64, 66 and phase shifters 68, 70. This produces at the output of an adder 72 a resultant frequency of 1135 times horizontal line rate plus 100 Hz, exactly equal to four times the subcarrier frequency. The two clock signals, 4f_{sc} and 1135H, are input to the sine and cosine generators 18, 20 and to the chrominance and luminance address generators 16, 26 as described above with reference to Fig. 1. In this architecture the two clocks, 4f_{sc} and 1135H, are locked together without a phase locked loop, eliminating a lengthy divider chain, PLL phase jitter and SCH errors.

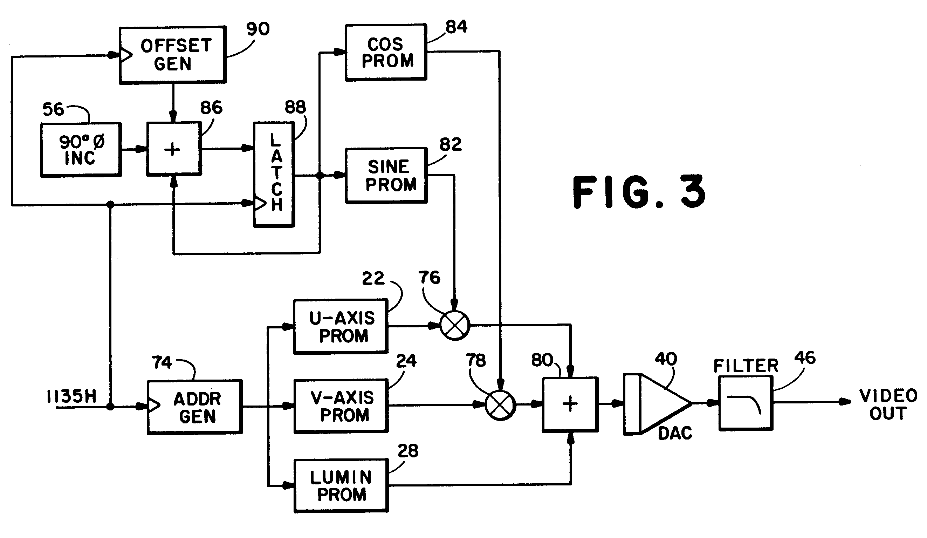

Another embodiment as shown in Fig. 3 uses a single clock at 1135H, eliminating the need to provide two precisely synchronized oscillators. The 1135H clock signal allows a signal address generator 74 to fetch samples from the U-axis, V-axis and luminance PROMs 22, 24, 28 at an 1135H rate. The U-axis and V-axis data are then digitally modulated by respective mutlipliers 76, 78 with digital representations of Sin(F_{sc}) and Cos(F_{sc}) and summed with the luminance data by adder 80. The resultant data is then passed through the DAC 40 and low pass filter 46 to produce the output video. Since all data are clocked at 1135H, only one DAC is required. The Sin(F_{sc}) and Cos(F_{sc}) data are generated by fetching data from a pair of PROMs 82, 84 which contain one cycle of digitized sine and cosine wave functions, respectively. Addresses for the sine and cosine PROMS 82, 84 are computed by summing at adder 86 the current address from a latch 88 with a fixed ninety degree phase increment from the phase increment circuit 86 and the output of an offset generator 90, the frequency of the offset generator being 25 Hz for PAL.

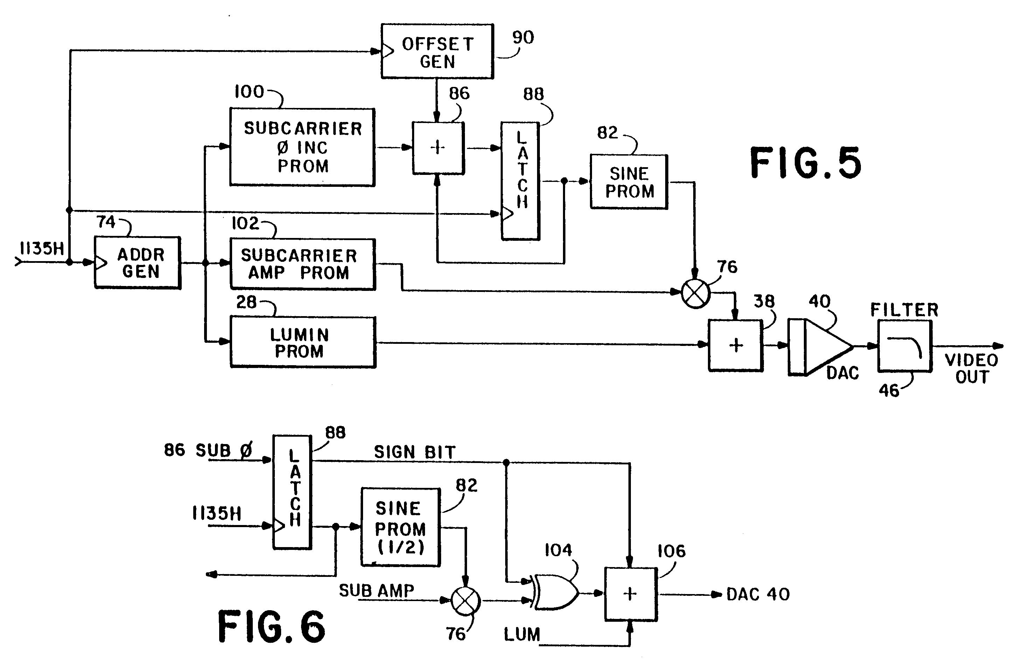

The offset generator 90 is shown in greater detail in Fig. 4. In the PAL television system the subcarrier frequency is defined as (1135/4) times the horizontal line rate plus 25 Hz. When the data is clocked at a rate of 1135H, this provides roughly four sample points per cycle of subcarrier. To produce the exact frequency required for the subcarrier, samples fetched from the sine PROM 82 must be slightly more than ninety degrees apart. In fact the 25 Hz offset can be thought of an adding an "extra" cycle of subcarrier during each period of 625 horizontal lines. To add this extra cycle, the offset generator 90 periodically increments the address of the sample being fetched from the sine PROM 82. As an example, for a sine PROM 82 containing a sine wave digitized into 4096 points and for 1135 points per horizontal line, there are 709,375 points per 625 line frame. To add the one extra subcarrier cycle every 625 lines, the offset generator 90 must produce a pulse every 709,375/4096 = 173.18726 clock cycles. The offset generator 90 approximates this value by waiting 174 clock cycles between pulses 3/16 of the time and 173 clock cycles between pulses 13/16 of the time. This corresponds to an average time between pulses of 173.18725 clock cycles. The small residual error introduced by this approximation is cleared out once every four frames by resetting the sine PROM address latch 88 to zero degrees at the start of field one, line one.

The offset generator 90 has a delay counter 92 which addresses a delay PROM 94 in a modulo 16 manner. The delay PROM 94 contains sixteen integers. A cycle counter 96 counts clock cycles and is preloaded with data from the delay PROM 94. A carry output from the cycle counter 96 is generated after 173 clock cycles, causing the delay counter 92 to increment which in turn selects the next integer in the delay PROM 94 for preloading into the cycle counter 96. The integers in the delay PROM 94 are chosen such that thirteen of them provide a delay of 173 clock cycles between carry pulses and three of them provide a delay of 174 clock cycles between carry pulses, making the average time between pulses 173.1875 clock cycles.

An alternative architecture as shown in Fig. 5 produces the chrominance subcarrier by modulating the amplitude and phase of a digitized sine wave. With this approach all data is clocked at 1135H, only one digital multiplier is required and both chrominance and luminance data pass through a single DAC. Each signal to be generated is broken into three components -- subcarrier phase increment, subcarrier amplitude and luminance, which components are stored in respective PROMs 100, 102, 28. The address generator 74 produces appropriate addresses to access the data in the respective PROMs 100, 102, 28. The chrominance subcarrier is generated by fetching samples from the sine PROM 82. By varying the sample rate and the number of addresses between subsequent samples a sine wave with arbitrary frequency and phase characteristics can be produced. The amplitude of the subcarrier is controlled by passing the output of the sine PROM 82 through digital multiplier 76. The address of the current sample to be fetched from the sine PROM 82 is computed by summing the previous address from the address latch 88 with the current data from subcarrier phase increment PROM 100 and the offset generator 90 at adder 86. The data from the sine PROM 82 is multiplied with the current data from the subcarrier amplitude PROM 102 to produce a chrominance subcarrier with the appropriate phase and amplitude attributes. The subcarrier data is summed at adder 38 with the current data from the luminance PROM 28, the resulting data being passed through DAC 40 and low pass filter 46. The use of the phase increment PROM provides the phase slewing desired to observe the envelope of frequency response signals, such as line sweep, multiburst and multipulse. The phase increment from the phase increment PROM 100 sets the frequency of the signal output sine wave and the amplitude from the amplitude PROM 102 modulates the envelope. By linearly varying the phase increment sample by sample a sine wave with a frequency which sweeps across the horizontal line as displayed on a waveform monitor is produced. Because the offset generator 90 causes a difference in phase on each line, when the television signal is displayed there appears to be negligible space between adjacent nodes of the sine wave and the envelope is readily apparent.

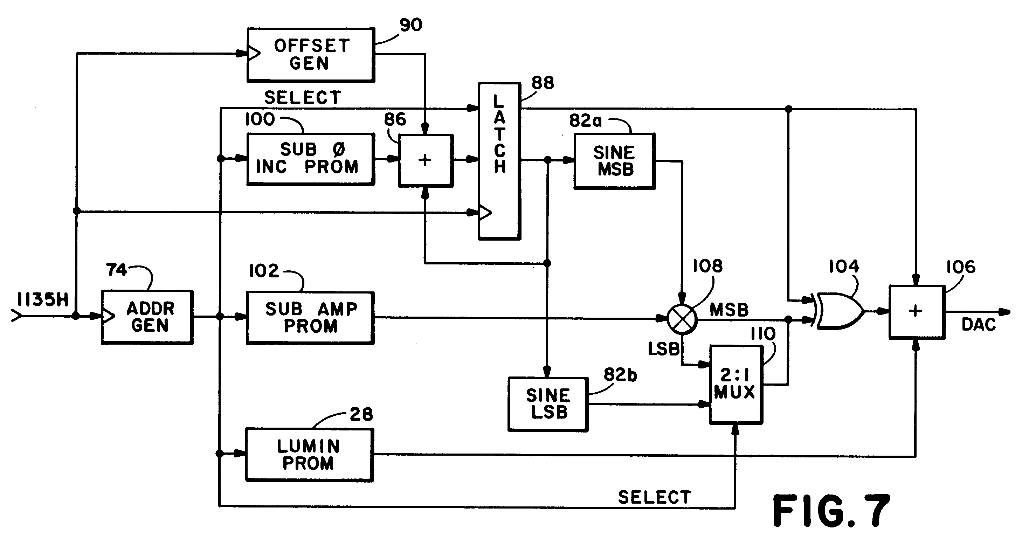

Fig. 6 shows an improved version of the architecture of Fig. 5 in that the sine PROM 82 contains only one-half cycle of a sine wave. The second half cycle is derived by addressing the first half cycle a second time and inverting the data. To make the second half cycle symmetric with the first an additional "1" is summed with the data at an adder 106 after the data has been inverted. With this method the most significant address bit from the address latch 88 becomes a sign bit and is passed around the multiplier 76 to an exclusive OR gate 104. The output of the multiplier 76 is also input to the exclusive OR gate 104, the output of the exclusive OR gate being the inverted data when the sign bit is "1". This configuration has the advantage of allowing an inexpensive NxN multiplier to generate data with N+1 bits of accuracy.

Another version of this architecture is shown in Fig. 7. Here multiple half cycles of the sine wave are stored in the sine PROM 82, which is expanded into a MSB PROM 82a and a LSB PROM 82b. These cycles are scaled such that there is a separate half cycle of sine wave for each steady state subcarrier amplitude needed for the test signals to be generated. This provides improved resolution for subcarrier samples. During periods of steady state subcarrier amplitudes, MSB data is passed from the MSB PROM 82a directly through a multiplier 108, and LSB data from the LSB PROM 82b is provided via a multiplexer 110. During subcarrier amplitude transitions, the time duration of which is very small relative to the steady state intervals, reduced resolution is provided by ignoring the output of the LSB PROM 82b at multiplexer 110. A select signal from the address generator 74 determines the state of the multiplexer 110 as well as setting the address latch 88 to address both sine PROMs 82a, 82b or only the MSB PROM. This improves the amplitude resolution of the subcarrier during steady state portions of the television signal without the need for a higher resolution digital multiplier.

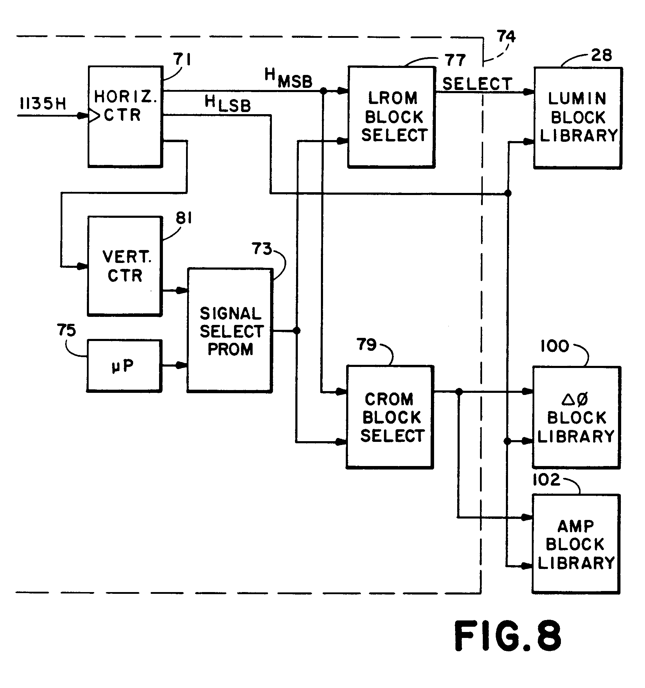

A portion of the signal address generator 74 is shown in Fig. 8 as applied to the architectures of Figs. 5-7. Respective PROMs 28, 100, 102 contain test signal data which is broken into blocks of sixteen samples. The four least significant address bits for these PROMs 28, 100, 102 are the four LSBs from a horizontal counter 71 which is clocked at 1135H. Thus data from the blocks of sixteen samples are accessed from these PROMs 28, 100, 102 at the 1135H rate. The upper address bits of these PROMs 28, 100, 102 are derived, respectively, from the outputs of an LROM and a CROM block PROMs 77, 79. These block select PROMs 77, 79 select which block of sixteen samples is being output by PROMs 28, 100, 102. The block select PROMs 77, 79 may be implemented with inexpensive EPROMs since they are accessed at one-sixteenth the 1135H sample rate. The addresses for the block select PROMs 77, 79 are derived from the most significant bits of the horizontal counter 71 and the output of a signal select PROM 73. The horizontal counter 71 bits are needed to allow "transition blocks" to be selected at the beginning and end of half lines. The signal select PROM 73 determines which signal appears on each horizontal line, thereby allowing signals such as convergence to be stored as only two discrete horizontal lines. The signal select PROM 73 also allows several test signals to be matrixed into one test pattern. The signal select PROM 73 address is in turn derived from the output of a vertical counter 81 and a microprocessor 75. The microprocessor 75 selects which test signal or matrix of test signals is to be generated, while the vertical counter 81 determines which signal appears on each horizontal line. The signal select PROM 73 may also be implemented with an inexpensive EPROM since it is accessed at a vertical rate of once per 1135H.

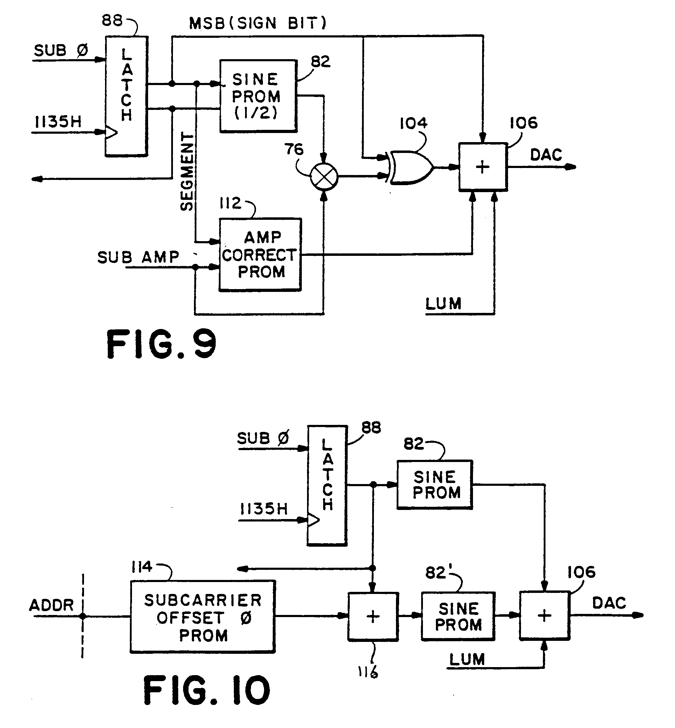

Another way for improving the resolution of the subcarrier, as shown in Fig. 9, is to divide a single half cycle of sine wave stored in the sine PROM 82 into multiple segments with the amplitude of each segment offset from zero by some integer number. Data is fetched from the sine PROM 82 and passed through the multiplier 76 just as in Fig. 6. However the output from the multiplier 76 via exclusive OR gate 104 is now summed at adder 106 with the output from an amplitude correction PROM 112 which contains data which is equal to the appropriate amplitude offset multiplied by the current data from the subcarrier amplitude PROM 102. The amplitude resolution using this scheme is improved without the need for a higher resolution digital multiplier, and improves amplitude resolution for subcarrier transition regions as well as steady state regions.

A further approach to the generation of television signals is shown in Fig. 10. In this arrangement the component of the television signal corresponding to the subcarrier amplitude is replaced with a subcarrier phase offset component stored in an offset PROM 114. In this arrangement the amplitude of the subcarrier is adjusted by summing the subcarrier at adder 106 with a second sine wave from a second sine PROM 82ʹ that has been offset in phase by adding an increment from the offset PROM 114 at adder 116 to the address from latch 88. By varying the phase offset from zero to 180 degrees, a resultant sine wave is produced at the output of the adder 106 which can be varied in amplitude from zero to twice the maximum value stored in each sine PROM 82, 82ʹ. In this way the resolution of the subcarrier amplitude can be increased indefinitely without the need for any digital multiplier.

Thus the present invention provides a television signal generator which eliminates residual subcarrier and SCH errors in the signal video output by using a fully digital approach for generating the signal components and for modulating the subcarrier.

## Claims

1. A television signal generator having:
generating means for generating digital representations of three components of a television signal, two components representing chrominance data and the third component representing luminance data; and
converter means (38, 76-90; 82-116) responsive to the' digital representations of the three components of a television signal and to a sine wave to generate the desired television signal characterised in that:
said digital representation of luminance data is produced at a first data rate, said first data rate being an integer multiple of the horizontal line rate of the television signal;
said digital representations of chrominance data are produced at a second data rate, said second data rate being different to said first data rate, and being an integer multiple of a chrominance subcarrier frequency; and
said converter means comprises:
multiplier means (34, 36) for multiplying the output of an interpolator means (30, 32) by digital representations of said sine wave to produce a digital representation of a modulated subcarrier, and said interpolator means (30, 32) interpolating the chrominance data on a line by line basis to expand the modulated subcarrier envelope; and
means (40, 42, 44) for combining an analogue version of said modulated subcarrier with an analogue version of said luminance data to produce said desired television signal.

2. A television signal generator according to claim 1 further comprising:
a system clock (50) operating at said first data rate;
memory means (54) for storing a digital representation of a sine wave function;
addressing means (52, 56, 58) for addressing the memory means, the addressing means being incremented by the system clock, and comprising a phase increment circuit (56) having a phase increment such that the output of the memory means is a digital representation of the difference frequency between said first and said second data rates;
means (60) for converting the digital representation of the difference frequency from the memory means (54) into an analog difference frequency;
means (64, 66) for multiplying the analog difference frequency with the output of the system clock (50), the output of the system clock being shifted by ninety degrees, and for multiplying the output of the system clock (50) with the analog difference frequency, the analog difference frequency being shifted by ninety degrees; and
means (72) for adding the respective outputs of the multiplying means to produce the second clock operating at said second data rate.

3. A television signal generator for generating a desired television signal comprising component storage means (22, 24, 28; 100, 102, 28; 100, 114, 28) for storing digital representations of three components of the desired television signal, two components representing chrominance data and the third component representing luminance data;
component addressing means (74) addressing the component storage means with a common clock (1135H) for each of the three components to produce digital representations of each component at the common clock rate the common clock rate being an integer multiple of the horizontal line rate of the television signal;
converter means (38, 76-90; 82-116) responsive to the digital representations of said three components at the common clock rate and to a sine wave to generate the desired television signal, characterised in that:-
the sine wave, the frequency thereof being a non-integer multiple of said horizontal line rate, is formed by digital representations of a sine wave function; and
the converter means comprises:-
chrominance combining means (76, 78; 82-88) receiving the digital representations of the chrominance signals at said common clock rate and combining said digital representations of the chrominance signals with said digital representations of said sine wave function at said common clock rate to produce a digital representation of a modulated subcarrier at said common clock rate; and
luminance combining means (38; 80; 106) for combining the digital representation of the modulated subcarrier signal with the digital representation of the luminance component to produce a digital representation of the desired television signal at said common clock rate.

4. A television signal according to claim 3 further comprising:-
sine wave function memory means (82, 84) for storing said digital representations of a sine wave function; and
address means (56, 86, 88, 90) for said sine wave function memory means (82, 84) responsive to a clock signal at said common clock rate, said address means (56, 86, 88, 90, 100) having latch means (88) having an output for a current address, and an input responsive to the sum of said current address, the output of an offset generator (90) and phase increment data, said latch means (88) being clocked by said clock signal at said common clock rate whereby said digital representations of said sine wave function represent a subcarrier complying with a given television standard.

5. A television signal generator according to claim 4 wherein the address means (56, 86, 88, 90) has a phase increment circuit (56) for producing said phase increment data, whereby said phase increment data is a constant.

6. A television signal generator according to claims 4 or 5 wherein said component storage means (22, 24, 28) comprises a first storage means (22) for U-axis chrominance data, a second storage means (24) for V-axis chrominance data and a third storage means (28) for luminance data.

7. A television signal generator according to claim 4 wherein the component storage means comprises a subcarrier phase increment memory (100) storing one of said chrominance data components as subcarrier phase increment data, whereby said digital representation of said subcarrier phase increment data at said common clock rate is applied to said address means (86, 88, 90) as said phase increment data.

8. A television signal generator according to claim 7 wherein the component storage means comprises a subcarrier amplitude memory (102) storing the other of said chrominance data components as subcarrier amplitude data for combination with the output of said sine wave function memory means.

9. A television signal generator as claimed in claim 8 wherein said sine wave function memory means (82) contains a digital representation of one-half cycle of a sine wave and said latch means (88) outputs an address for the sine wave function memory means, and a sign bit, and said chrominance combining means has:-
multiplying means (76) for multiplying the output of the sine wave function memory means by the output of the subcarrier amplitude memory; and
inverting means (104) responsive to the sign bit for selectively inverting the output of the multiplying means.

10. A television signal generator as claimed in claim 9 wherein the luminance combining means adds (106) the digital representation of the luminance data from the luminance memory unit to the output of the inverting means and the sign bit to produce the digital representation of the desired television signal.

11. A television signal generator as claimed in claim 8 wherein:-
the sine wave function memory means (82a, 82b) has a first output for the most significant bits and a second output for the least significant bits of said digital representations of a sine wave function;
and the chrominance combining means has:-
multiplying means (108) for multiplying said first output with the output of the subcarrier amplitude memory (102), the multiplying means having a first output for the most significant bits of the digital representations of the subcarrier and a second output for the least significant bits of the digital representations of the subcarrier; and
selecting means (110) for selecting between said second output of the sine wave function memory means and the second output of the multiplying means to provide the least significant bits for combination with the first output of the multiplying means.

12. A television signal generator as claimed in claim 11 wherein the chrominance combining means has means (104) for inverting the combined output of the multiplying means (108) and the selecting means (110) in response to a sign bit from the sine wave function memory means to produce the digital representation of the modulated subcarrier signal.

13. A television signal generator as claimed in claim 8 wherein:
the sine wave function memory means (82) contains digital representation of one-half cycle of a sine wave and further comprising:
an amplitude correction memory (112) having as an input the output of the subcarrier amplitude memory (102), the amplitude correction memory containing data equal to an amplitude offset multiplied by the current data from the subcarrier amplitude memory, said address means for said sine wave function memory means also addressing the amplitude correction memory;
means (76) for multiplying the output of the sine wave function memory means with the input of the subcarrier amplitude memory to produce the digital representation of the modulated subcarrier; and
means (104, 106) for combining the output of the amplitude correction memory (112), the output of the multiplying means (76) and the digital representation of the luminance data component to produce the digital representation of the television signal.

14. A television signal generator as claimed in claim 7 wherein the component storage means (100, 114, 28) further comprises:
a subcarrier offset phase memory unit (114) to store the other chrominance data component.

15. A television signal generator as claimed in claim 14 comprising:
adding means (116) for adding the output from the subcarrier offset phase memory (114) to the output of the latch means (88) adressing a second sine wave function memory means (82'); and
means (106) for summing the output of the sine wave function memory means (82), as addressed by said latch means with the output of said second sine wave function memory means (82'), as addressed by the output of the adding means (116) and with the digital representation of the luminance data component to produce the digital representation of the television signal.

16. A television signal generator as claimed in claim 3 wherein the component addressing means (74) comprises:
means (71, 73, 75, 81) for generating a select command and an address command, the address command having a most significant bit portion and a least significant bit portion; and
means (77, 79) responsive to the select command and the most significant bit portion of the address command for generating a block address for the component storing means (100, 102 28), the digital representations of the three components being grouped into blocks of samples for a horizontal line, a particular sample within each block being addressed by the least significant bit portion of the address command.

## Patentansprüche

1. Fernsehsignalerzeuger mit:
einer Erzeugungseinrichtung zur Erzeugung von Digitaldarstellungen mit drei Bestandteilen eines Fernsehsignals, wobei zwei Bestandteile Chrominanzdaten darstellen und wobei der dritte Bestandteil Luminanzdaten darstellt; und mit
einer Umsetzereinrichtung (38, 76-90; 82-116), welche auf die Digitaldarstellungen der drei Bestandteile eines Fernsehsignals sowie auf eine Sinuskurve anspricht, um das verlangte Fernsehsignal zu erzeugen, dadurch gekennzeichnet, daß:
die genannte Digitaldarstellung der Luminanzdaten mit einer ersten Übertragungsgeschwindigkeit erzeugt wird, wobei die erste Übertragungsgeschwindigkeit ein ganzzahliges Vielfaches der horizontalen Zeilengeschwindigkeit des Fernsehsignals darstellt;
die genannten Digitaldarstellungen der Chrominanzdaten mit einer zweiten Übertragungsgeschwindigkeit erzeugt werden, wobei sich die zweite Übertragungsgeschwindigkeit von der ersten Übertragungsgeschwindigkeit unterscheidet und ein ganzzahliges Vielfaches einer Chrominanzzwischenträgerfrequenz darstellt; und daß
die Umsetzereinrichtung folgendes umfaßt:
eine Multipliziereinrichtung (34, 36) zur Multiplikation der Ausgabe einer Interpolatoreinrichtung (30, 32) mit den Digitaldarstellungen der genannten Sinuskurve, um so eine Digitaldarstellung eines modulierten Zwischenträgers zu erzeugen und wobei die genannte Interpolatoreinrichtung (30, 32) die Chrominanzdaten zeilenweise interpoliert, um die Hülle des modulierten Zwischenträgers zu erweitern; und
eine Einrichtung (40, 42, 44) zur Kombination einer analogen Ausführung des modulierten Zwischenträgers mit einer analogen Ausführung der Luminanzdaten, um so das verlangte Fernsehsignal zu erzeugen.

2. Fernsehsignalerzeuger nach Anspruch 1, ferner mit:
einem Systemtakt (50), der mit der genannten ersten Übertragungsgeschwindigkeit arbeitet;
einer Speichereinrichtung (54) zum Speichern einer Digitaldarstellung einer Sinuskurvenfunktion;
einer Adressierungseinrichtung (52, 56, 58) zur Adressierung der Speichereinrichtung, wobei die Adressierungseinrichtung durch den Systemtakt erhöht wird und einen Phasenerhöhungskreis (56) mit einer Phasenerhöhung umfaßt, so daß die Ausgabe der Speichereinrichtung eine Digitaldarstellung der Differenzfrequenz zwischen der ersten und der zweiten Übertragungsgeschwindigkeit ist;
einer Einrichtung (60) zur Umsetzung der Digitaldarstellung der Differenzfrequenz aus der Speichereinrichtung (54) in eine analoge Differenzfrequenz;
einer Einrichtung (64, 66) zur Multiplikation der analogen Differenzfrequenz mit der Ausgabe des Systemtakts (50), wobei die Ausgabe des Systemtakts um neunzig Grad verschoben wird und wobei die analoge Differenzfrequenz zur Multiplikation der Ausgabe des Systemtakts (50) mit der analogen Differenzfrequenz um neunzig Grad verschoben wird; und
einer Einrichtung (72) zur Addition der entsprechenden Ausgaben der Multiplikationseinrichtung, zur Erzeugung des zweiten Takts, der mit der zweiten Übertragungsgeschwindigkeit arbeitet.

3. Fernsehsignalerzeuger zur Erzeugung eines verlangten Fernsehsignals, mit einer Bestandteilspeichereinrichtung (22, 24, 28; 100, 102, 28; 100, 114, 28) zur Speicherung von Digitaldarstellungen der drei Bestandteile des verlangten Fernsehsignals, wobei zwei Bestandteile Chrominanzdaten darstellen und wobei der dritte Bestandteil Luminanzdaten darstellt;
einer Bestandteiladressierungseinrichtung (74), welche die Bestandteilspeichereinrichtung mit einem gemeinsamen Takt (1135H) für jeden der drei Bestandteile adressiert, um Digitaldarstellungen für jeden Bestandteil mit der gemeinsamen Taktgeschwindigkeit zu erzeugen, wobei die gemeinsame Taktgeschwindigkeit ein ganzzahliges Vielfaches der horizontalen Zeilengeschwindigkeit des Fernsehsignals darstellt;
einer Umsetzereinrichtung (38, 76-90; 82-116), welche auf die Digitaldarstellungen der genannten drei Bestandteile mit der gemeinsamen Taktgeschwindigkeit und auf eine Sinuskurve anspricht, um so das verlangte Fernsehsignal zur erzeugen, dadurch gekennzeichnet, daß:
die Sinuskurve, deren Frequenz ein nicht-ganzzahliges Vielfaches der horizontalen Zeilengeschwindigkeit ist, durch die Digitaldarstellungen einer Sinuskurvenfunktion gestaltet ist; und
die Umsetzereinrichtung folgendes umfaßt:
eine Chrominanzkombinationseinrichtung (76, 78; 82-88), welche Digitaldarstellungen der Chrominanzsignale mit der genannten gemeinsamen Taktgeschwindigkeit empfängt und welche die Digitaldarstellungen der Chrominanzsignale mit der gemeinsamen Taktgeschwindigkeit mit den Digitaldarstellungen der Sinuskurvenfunktion kombiniert, um eine Digitaldarstellung eines modulierten Zwischenträgers mit der gemeinsamen Taktgeschwindigkeit zu erzeugen; und
eine Luminanzkombinationseinrichtung (38; 80; 106) zur Kombination der Digitaldarstellung des modulierten Zwischenträgersignals mit der Digitaldarstellung des Luminanzbestandteils, um eine Digitaldarstellung des verlangten Fernsehsignals mit der gemeinsamen Taktgeschwindigkeit zu erzeugen.

4. Fernsehsignal nach Anspruch 3, ferner mit:
einer Sinuskurvenfunktionsspeichereinrichtung (82, 84) zur Speicherung der genannten Digitaldarstellungen einer Sinuskurvenfunktion; und
einer Adresseinrichtung (56, 86, 88, 90) für die genannte Sinuskurvenfunktionsspeichereinrichtung (82, 84), welche auf ein Taktsignal mit der gemeinsamen Taktgeschwindigkeit anspricht, wobei die Adresseinrichtung (56, 86, 88, 90, 100) eine Signalspeichereinrichtung (88) aufweist, welche eine Ausgabe für eine aktuelle Adresse umfaßt und eine Eingabe, welche auf die Summe der genannten aktuellen Adresse, der Ausgabe eines Versatzgenerators (90) und der Phasenerhöhungsdaten anspricht, wobei die genannte Signalspeichereinrichtung (88) durch das Taktsignal mit der gemeinsamen Taktgeschwindigkeit getaktet ist, wodurch die Digitaldarstellungen der Sinuskurvenfunktion einen Zwischenträger darstellen, der einer vorgegebenen Fernsehnorm entspricht.

5. Fernsehsignalerzeuger nach Anspruch 4, dadurch gekennzeichnet, daß die Adresseinrichtung (56, 86, 88, 90) einen Phasenerhöhungskreis (56) zur Erzeugung der Phasenerhöhungsdaten umfaßt, wodurch die Phasenerhöhungsdaten eine Konstante darstellen.

6. Fernsehsignalerzeuger nach Anspruch 4 oder 5, dadurch gekennzeichnet, daß die genannte Bestandteilspeichereinrichtung (22, 24, 28) eine erste Speichereinrichtung (22) für U-Achsen-Chrominanzdaten umfaßt, eine zweite Speichereinrichtung (24) für V-Achsen-Chrominanzdaten und eine dritte Speichereinrichtung (28) für Luminanzdaten.

7. Fernsehsignalerzeuger nach Anspruch 4, dadurch gekennzeichnet, daß die Bestandteilspeichereinrichtung einen Zwischenträgerphasenerhöhungsspeicher (100) umfaßt, der einen der genannten Chrominanzdatenbestandteile als Zwischenträgerphasenerhöhungsdaten speichert, wodurch die genannte Digitaldarstellung der Zwischenträgerphasenerhöhungsdaten mit der gemeinsamen Taktgeschwindigkeit bei der Adresseinrichtung (86, 88, 90) als Phasenerhöhungsdaten verwendet wird.

8. Fernsehsignalerzeuger nach Anspruch 7, dadurch gekennzeichnet, daß die Bestandteilspeichereinrichtung einen Zwischenträgeramplitudenspeicher (102) umfaßt, der den anderen Chrominanzdatenbestandteil als Zwischenträgeramplitudendaten speichert, und zwar zur Kombination mit der Ausgabe der genannten Sinuskurvenfunktionsspeichereinrichtung.

9. Fernsehsignalerzeuger nach Anspruch 8, dadurch gekennzeichnet, daß die genannte Sinuskurvenfunktionsspeichereinrichtung (82) eine Digitaldarstellung eines Halbzykluses einer Sinuskurve enthält und-daß die genannte Signalspeichereinrichtung (88) eine Adresse für die Sinuskurvenfunktionsspeichereinrichtung sowie ein Vorzeichenbit ausgibt und wobei die Chrominanzkombinationseinrichtung folgendes umfaßt:
eine Multiplikationseinrichtung (76) zur Multiplikation der Ausgabe der Sinuskurvenfunktionsspeichereinrichtung mit der Ausgabe des Zwischenträgeramplitudenspeichers; und
eine Umkehreinrichtung (104), welche auf das Vorzeichenbit anspricht, um die Ausgabe der Multiplikationseinrichtung wahlweise umzukehren.

10. Fernsehsignalerzeuger nach Anspruch 9, dadurch gekennzeichnet, daß die Luminanzkombinationseinrichtung (106) die Digitaldarstellung der Luminanzdaten aus der Luminanzspeichereinheit zu der Ausgabe der Umkehreinrichtung und dem Vorzeichenbit addiert, um die Digitaldarstellung des verlangten Fernsehsignals zu erzeugen.

11. Fernsehsignalerzeuger nach Anspruch 8, dadurch gekennzeichnet, daß:
die Sinuskurvenfunktionsspeichereinrichtung (82a, 82b) eine erste Ausgabe für die werthöchsten Bits umfaßt sowie eine zweite Ausgabe für die Ausgabe der wertniedrigsten Bits der genannten Digitaldarstellungen einer Sinuskurvenfunktion;
und daß die Chrominanzkombinationseinrichtung folgendes umfaßt:
eine Multipliziereinrichtung (108) zur Multiplikation der genannten ersten Ausgabe mit der Ausgabe des Zwischenträgeramplitudenspeichers (102), wobei die Multipliziereinrichtung eine erste Ausgabe für die werthöchsten Bits der Digitaldarstellungen des Zwischenträgers umfaßt sowie eine zweite Ausgabe für die wertniedrigsten Bits der Digitaldarstellungen des Zwischenträgers; und
eine Auswahleinrichtung (110) zur Auswahl zwischen der genannten zweiten Ausgabe der Sinuskurvenfunktionsspeichereinrichtung und der zweiten Ausgabe der Multipliziereinrichtung, um die wertniedrigsten Bits für die Kombination mit der ersten Ausgabe der Multipliziereinrichtung vorzusehen.

12. Fernsehsignalerzeuger nach Anspruch 11, dadurch gekennzeichnet, daß die Chrominanzkombinationseinrichtung eine Einrichtung (104) aufweist, zur Umkehr der kombinierten Ausgabe der Multipliziereinrichtung (108) und der Auswahleinrichtung (110), und zwar als Reaktion auf ein Vorzeichenbit aus der Sinuskurvenfunktionsspeichereinrichtung, um die Digitaldarstellung des modulierten Zwischenträgersignals zu erzeugen.

13. Fernsehsignalerzeuger nach Anspruch 8, dadurch gekennzeichnet, daß:
die Sinuskurvenfunktionsspeichereinrichtung (82) eine Digitaldarstellung eines Halbzykluses einer Sinuskurve enthält und ferner umfassend:
einen Amplitudenkorrekturspeicher (112), der als Eingabe die Ausgabe des Zwischenträgeramplitudenspeichers (102) aufweist, wobei der Amplitudenkorrekturspeicher Daten enthält, welche einem Amplitudenversatz gleichen, der mit den aktuellen Daten aus dem Zwischenträgeramplitudenspeicher multipliziert ist, wobei die genannte Adresseinrichtung für die Sinuskurvenfunktionsspeichereinrichtung auch den Amplitudenkorrekturspeicher adressiert;
eine Einrichtung (76) zur Multiplikation der Ausgabe der Sinuskurvenfunktionsspeichereinrichtung mit der Eingabe des Zwischenträgeramplitudenspeichers, um die Digitaldarstellung des modulierten Zwischenträgers zu erzeugen; und
eine Einrichtung (104, 106) zur Kombination der Ausgabe des Amplitudenkorrekturspeichers (112), der Ausgabe der Multipliziereinrichtung (76) und der Digitaldarstellung des Luminanzdatenbestandteils, zur Erzeugung der Digitaldarstellung des Fernsehsignals.

14. Fernsehsignalerzeuger nach Anspruch 7, dadurch gekennzeichnet, daß die Bestandteilspeichereinrichtung (100, 114, 28) ferner folgendes umfaßt:
eine Zwischenträgerversatzphasenspeichereinheit (114) zum Speichern des anderen Chrominanzdatenbestandteils.

15. Fernsehsignalerzeuger nach Anspruch 14, mit:
einer Addiereinrichtung (116) zum Addieren der Ausgabe des Zwischenträgerversatzphasenspeichers (114) zu der Ausgabe der Signalspeichereinrichtung (88), zur Adressierung einer zweiten Sinuskurvenfunktionsspeichereinrichtung (82'); und
einer Einrichtung (106) zur Summierung der Ausgabe der Sinuskurvenfunktionsspeichereinrichtung (82), wie diese durch die genannte Signalspeichereinrichtung adressiert ist, mit der Ausgabe der genannten zweiten Sinuskurvenfunktionsspeichereinrichtung (82'), wie sie durch die Ausgabe der Addiereinrichtung (116) adressiert ist, und mit der Digitaldarstellung des Luminanzdatenbestandteils, zur Erzeugung der Digitaldarstellung des Fernsehsignals.

16. Fernsehsignalerzeuger nach Anspruch 3, dadurch gekennzeichnet, daß die Bestandteiladressierungseinrichtung (74) folgendes umfaßt:
eine Einrichtung (71, 73, 75, 81) zur Erzeugung eines Auswahlbefehls und eines Adressbefehls, wobei der Adressbefehl einen Teil der werthöchsten Bits und einen Teil der wertniedrigsten Bits umfaßt; und
eine Einrichtung (77, 79), welche auf den Auswahlbefehl und den Teil der werthöchsten Bits des Adressbefehls anspricht, um eine Blockadresse für die Bestandteilspeichereinrichtung (100, 102, 28) zu erzeugen, wobei die Digitaldarstellungen der drei Bestandteile in Abtastblöcke für eine horizontale Zeile eingeteilt sind, wobei ein bestimmter Abtastzustand in jedem Block durch den Teil der wertniedrigsten Bits des Adressbefehls adressiert wird.

## Revendications

1. Générateur de signal de télévision comprenant :
des moyens de génération pour engendrer des représentations numériques de trois composantes d'un signal de télévision dont deux composantes représentent des données de chrominance et la troisième composante représente des données de luminance ; et
des moyens de conversion (38,76-90;82-116) qui répondent aux représentations numériques des trois composantes d'un signal de télévision et à une onde sinusoïdale pour engendrer le signal de télévision désiré,
caractérisé en ce que :
ladite représentation numérique des données de luminance est produite à une première cadence de données, ladite première cadence de données étant un entier multiple de la fréquence des lignes horizontales du signal de télévision ;
lesdites représentations numériques des données de chrominance sont produites à une deuxième cadence de données, ladite deuxième cadence de données étant différente de ladite première cadence de données et étant un multiple entier d'une fréquence de sous-porteuse de chrominance ; et
lesdits moyens de conversion comprennent :
des moyens de multiplication (34,36) pour multiplier la sortie d'un interpolateur (30,32) par les représentations numériques de ladite onde sinusoïdale pour produire une représentation numérique d'une sous-porteuse modulée ;
lesdits moyens d'interpolation (30,32) interpolant les données de chrominance sur une base ligne par ligne, afin de dilater l'enveloppe de sous-porteuse modulée ; et
des moyens (40,42,44) de combinaison d'une version analogique de ladite sous-porteuse modulée avec une version analogique desdites données de luminance pour produire ledit signal de télévision désiré.

2. Générateur de signal de télévision suivant la revendication 1, comprenant en outre :
une horloge de système (50) fonctionnant à la dite première cadence de données ;
des moyens de mémoire (54) pour stocker une représentation numérique d'une fonction d'onde sinusoïdale;
des moyens d'adressage (52,56,58) pour adresser les moyens de mémoire, les moyens d'adressage étant incrémentés par l'horloge de sytème et comprenant un circuit d'incrément de phase (56) ayant un incrément de phase tel que la sortie des moyens de mémoire est une représentation numérique de la différence de fréquence entre les dites première et deuxième cadences de données ;
des moyens (60) de conversion de la représentation numérique de la différence de fréquence, à partir des moyens de mémoire (54), en une différence de fréquence analogique ;
des moyens (64,66) pour multiplier la différence de fréquence analogique avec la sortie de l'horloge de système (50), la sortie de l' horloge de système étant décalée de 90 degrés, et pour multiplier la sortie de l'horloge de système (50) avec la différence de fréquence analogique, la différence de fréquence analogique étant décalée de 90 degrés et
des moyens (72) pour ajouter les sorties respectives des moyens de multiplication afin de produire la deuxième horloge fonctionnant à ladite deuxième cadence de données.

3. Générateur de signal de télévision pour engendrer un signal de télévision désiré, comprenant des moyens de stockage de composantes (22,24,28;100,102,128; 100,114,28) pour stocker des représentations numériques de trois composantes du signal de télévision désiré, deux composantes représentant les données de chrominance et la troisième composante représentant des données de luminance ;
des moyens d'adressage de composantes (74) adressant les moyens de stockage de composantes avec une horloge commune (1135H) pour chacune des trois composantes, afin de produire des représentations numériques de chaque composante à la fréquence d'horloge commune, la fréquence d'horloge commune étant un entier multiple de la fréquence de lignes horizontales du signal de télévision ;
des moyens de conversion (38,76-90;82-116) qui répondent aux représentations numériques desdites trois composantes à la fréquence d'horloge commune et à une onde sinusoïdale pour engendrer le signal de télévision désiré,
caractérisé en ce que :
l'onde sinusoïdale, dont la fréquence est un multiple non entier de ladite fréquence de lignes horizontales, est formée par des représentations numériques d'une fonction d'onde sinusoïdale ; et
les moyens de conversion comprennent :
des moyens de combinaison de chrominance (76, 78;82-88) recevant les représentations numériques des signaux de chrominance à ladite fréquence d'horloge commune et combinant lesdites représentations numériques des signaux de chrominance avec lesdites représentations numériques de ladite fonction d'onde sinusoïdale à la dite fréquence d'horloge commune, pour produire une représentation numérique d'une sous-porteuse modulée, à la dite fréquence d'horloge commune ; et
des moyens de combinaison de luminance (38;80; 106) pour combiner la représentation numérique du signal de sous-porteuse modulée avec la représentation numérique de la composante de luminance, afin de produire une représentation numérique du signal de télévision désiré, à la dite fréquence d'horloge commune.

4. Générateur de signal de télévision suivant la revendication 3, comprenant en outre :
des moyens de mémoire de fonction d'onde sinusoïdale (82,84) pour stocker lesdites représentations numériques d'une fonction d'onde sinusoïdale ; et
des moyens d'adressage (56,86,88,90) pour les dits moyens de mémoire de fonction d'onde sinusoïdale (82,84) qui répondent à un signal d'horloge à ladite fréquence commune d'horloge, lesdits moyens d'adressage (56,86,88,90,100) comportant des moyens d'accrochage (88) ayant une sortie pour une adresse en cours, et une entrée qui répond à la somme de ladite adresse en cours, de la sortie d'un générateur de décalage (90) et à des données d'incrément de phase, lesdits moyens d'accrochage (88) étant impulsés par ledit signal d'horloge à ladite fréquence d'horloge commune, à ladite adresse en cours, de sorte que lesdites représentations numériques de ladite fonction d'onde sinusoïdale représentent une sous-porteuse conforme à un standard de télévision donné.

5. Générateur de signal de télévision suivant la revendication 4, dans lequel les moyens d'adressage (56,86,88,90) comportent un circuit d'incrément de phase (56) pour produire lesdites données d'incrément de phase, de sorte que lesdites données d'incrément de phase sont une constante.

6. Générateur de signal de télévision suivant la revendication 4 ou 5, dans lequel lesdits moyens de stockage de composantes (22,24,28) comprennent des premiers moyens de stockage (22) pour les données de chrominance sur l'axe U, des deuxièmes moyens de stockage (24) pour les données de chrominance sur l'axe V et des troisièmes moyens de stockage (28) pour les données de luminance.

7. Générateur de signal de télévision suivant la revendication 4, dans lequel les moyens de stockage de composantes comprennent une mémoire d'incrément de phase de sous-porteuse (100) stockant une desdites composantes de données de chrominance sous la forme de données d'incrément de phase de sous-porteuse, de sorte que la dite représentation numérique desdites données d'incrément de phase de sous-porteuse à ladite fréquence d'horloge commune est appliquée auxdits moyens d'adressage (86, 88,90) comme dites données d'incrément de phase.

8. Générateur de signal de télévision suivant la revendication 7, dans lequel les moyens de stockage de composantes comprennent une mémoire d'amplitude de sous-porteuse (102) stockant l'autre desdites composantes de données de chrominance comme données d'amplitude de sous-porteuse pour combinaison avec la sortie desdits moyens de mémoire de fonction d'onde sinusoïdale.

9. Générateur de signal de télévision suivant la revendication 8, dans lequel lesdits moyens de mémoire de fonction d'onde sinusoïdale (82) contiennent une représentation numérique d'un demi-cycle d'une onde sinusoïdale et lesdits moyens d'accrochage (88) fournissent une adresse, pour les moyens de mémoire de fonction d'onde sinusoïdale, et un bit de signe, et lesdits moyens de combinaison de chrominance comprennent :
des moyens de multiplication (76) pour multiplier la sortie des moyens de mémoire de fonction d'onde sinusoïdale avec la sortie de la mémoire d'amplitude de sous-porteuse ; et
des moyens d'inversion (104) qui répondent au bit de signe pour inverser sélectivement la sortie des moyens de multiplication.

10. Générateur de signal de télévision suivant la revendication 9, dans lequel les moyens de combinaison de luminance ajoutent (106) la représentation numérique des données de luminance, venant de l'unité de mémoire de luminance, à la sortie des moyens d'inversion et au bit de signe pour produire la représentation numérique du signal de télévision désiré.

11. Générateur de signal de télévision suivant la revendication 8, dans lequel :
les moyens de mémoire de fonction d'onde sinusoïdale (82a,82b) comportent une première sortie pour les bits de poids fort et une deuxième sortie pour les bits de poids faible desdites représentations numériques d'une fonction d'onde sinusoïdale ; et
les moyens de combinaison de chrominance comprennent :
des moyens de multiplication (108) pour multiplier ladite première sortie avec la sortie de la mémoire d'amplitude de sous-porteuse (102), les moyens de multiplication comportant une première sortie pour les bits de poids fort des représentations numériques de la sous-porteuse et une deuxième sortie pour les bits de poids faible des représentations numériques de la sous-porteuse ; et
des moyens de sélection (110) pour choisir entre ladite deuxième sortie des moyens de mémoire de fonction d'onde sinusoïdale et la deuxième sortie des moyens de multiplication, afin de fournir les bits de poids faible pour combinaison avec la première sortie des moyens de multiplication.

12. Générateur de signal de télévision suivant la revendication 11, dans lequel les moyens de combinaison de chrominance comprennent des moyens (104) pour inverser la sortie combinée des moyens de multiplication (108) et des moyens de sélection (110) en réponse à un bit de signe venant des moyens de mémoire de fonction d'onde sinusoïdale, afin de produire la représentation numérique du signal de sous-porteuse modulé.

13. Générateur de signal de télévision suivant la revendication 8, dans lequel :
les moyens de mémoire de fonction d'onde sinusoïdale (82) contiennent une représentation numérique d'un demi-cycle d'une onde sinusoïdale et comprennent en outre :
une mémoire de correction d'amplitude (112) ayant comme entrée la sortie de la mémoire d'amplitude de sous-porteuse (102), la mémoire de correction d'amplitude contenant des données égales à un décalage d'amplitude multiplié par les données en cours venant de la mémoire d'amplitude de sous-porteuse, lesdits moyens d'adressage pour lesdits moyens de mémoire de fonction d'onde sinusoïdale adressant également la mémoire de correction d'amplitude ;
des moyens (76)pour multiplier la sortie des moyens de mémoire de fonction d'onde sinusoïdale avec l'entrée de la mémoire d'amplitude de sous-porteuse pour produire la représentation numérique de la sous-porteuse modulée ; et
des moyens (104,106) pour combiner la sortie de la mémoire de correction d'amplitude (112), la sortie des moyens de multiplication (76) et la représentation numérique de la composante de données de luminance, pour produire la représentation numérique du signal de télévision.

14. Générateur de signal de télévision suivant la revendication 7, dans lequel les moyens de stockage de composantes (100,114,28) comprennent en outre :
une unité de mémoire de phase de décalage de sous-porteuse (114) pour stocker l'autre composante de données de chrominance.

15. Générateur de signal de télévision suivant la revendication 14, comprenant :
des moyens d'addition (116) pour ajouter la sortie de la mémoire de phase de décalage de sous-porteuse (114) à la sortie des moyens d'accrochage (88) pour l'adressage de deuxièmes moyens de mémoire de fonction d'onde sinusoïdale (82') ; et
des moyens (106) pour ajouter la sortie des moyens de mémoire de fonction d'onde sinusoïdale (82), adressés par lesdits moyens d'accrochage, avec la sortie desdits deuxièmes moyens de mémoire de fonction d'onde sinusoïdale (82'), adressés par la sortie des moyens d'addition (116), et avec la représentation numérique de la composante de données de luminance, pour produire la représentation numérique du signal de télévision.

16. Générateur de signal de télévision suivant la revendication 3, dans lequel les moyens d'adressage de composantes (74) comprennent :
des moyens (71,73,75,81) pour engendrer une instruction de sélection et une instruction d'adressage, l'instruction d'adressage ayant une partie constituée de bits de poids fort et une partie constituée de bits de poids faible ; et
des moyens (77,79) qui répondent à l'instruction de sélection et à la partie de bits de poids fort de l'instruction d'adressage de manière à engendrer une adresse de bloc pour les moyens de stockage de composantes (100, 102,28), les représentations numériques des trois composantes étant groupées en blocs d'échantillons pour une ligne horizontale, un échantillon particulier dans chaque bloc étant adressé par la partie de bits de poids faible de l'instruction d'adressage.
